Europäisches Patentamt

European Patent Office

Office européen des brevets

(19)

(11) **EP 0 678 156 B1**

(12) **FASCICULE DE BREVET EUROPEEN**

(45) Date de publication et mention
de la délivrance du brevet:
**21.08.1996 Bulletin 1996/34**

(21) Numéro de dépôt: **94904204.8**

(22) Date de dépôt: **06.01.1994**

(51) Int Cl.⁶: **F02B 77/08**, G01M 15/00

(86) Numéro de dépôt international:
**PCT/FR94/00015**

(87) Numéro de publication internationale:
**WO 94/16209 (21.07.1994 Gazette 1994/17)**

(54) **PROCEDE ET APPAREIL DE DETECTION DES RATES DE COMBUSTION D'UN MOTEUR A COMBUSTION INTERNE ET ALLUMAGE COMMANDE**

VERFAHREN UND VORRICHTUNG ZUR DETEKTION DER FEHLZÜNDUNGEN EINER BRENNKRAFTMASCHINE MIT FUNKENZÜNDUNG

PROCESS AND APPARATUS FOR THE DETECTION OF MISFIRING IN A SPARK-IGNITION INTERNAL COMBUSTION ENGINE

(84) Etats contractants désignés:
**DE ES FR GB IT SE**

(30) Priorité: **08.01.1993 FR 9300143**

(43) Date de publication de la demande:
**25.10.1995 Bulletin 1995/43**

(73) Titulaire: **MAGNETI MARELLI FRANCE**
**F-92000 Nanterre (FR)**

(72) Inventeurs:
• **WALLERAND, Philippe**
**F-78500 Sartrouville (FR)**
• **GENIN, Christophe**
**F-77186 Noisiel (FR)**

(74) Mandataire: **Bérogin, Francis**
**Cabinet Plasseraud**
**84, rue d'Amsterdam**
**75009 Paris (FR)**

(56) Documents cités:
GB-A- 2 256 491          US-A- 5 016 593
US-A- 5 044 194

• **PATENT ABSTRACTS OF JAPAN vol. 011, no. 243 (P-603) 8 Août 1987 & JP,A,62 054 138 (YANMAR) 9 Mars 1987**

## Description

L'invention concerne un procédé et un appareil de détection des ratés de combustion d'un moteur à combustion interne du type dit à allumage commandé, ou encore à allumage par étincelles, pour véhicule automobile, et en particulier pour un véhicule dont le moteur est, d'une part, associé à un pot d'échappement catalytique, appelé catalyseur dans la suite de la description, et, d'autre part, équipé d'une installation d'alimentation en combustible par injection, et tel que l'injection et de préférence également l'allumage du moteur soient commandés par un système électronique de commande et de contrôle, appelé contrôle moteur.

La détection des ratés de combustion dans tous les moteurs à explosion est devenue un problème majeur, en raison des réglementations les plus récentes ou à venir en matière de protection de l'environnement, et que doivent respecter ces moteurs, associés à des catalyseurs.

On sait en effet que la survenance de ratés de combustion peut entraîner une détérioration du catalyseur, voire une destruction de ce dernier en cas de ratés successifs non détectés à temps, du fait de l'arrivée dans le catalyseur de quantités, pouvant être trop importantes, de mélanges combustibles non brûlés résultant de ces ratés de combustion. Cette détérioration ou destruction du catalyseur est à l'origine d'émanations non contrôlées de polluants nocifs dans les gaz d'échappement, donc d'une pollution de l'environnement entraînant une mise hors réglementation du véhicule.

Le problème à la base de l'invention est de proposer un procédé et un appareil de détection des ratés de combustion, permettant d'alerter le conducteur en cas de risque de défaillance du catalyseur et/ou de donner une information sur l'état de ce dernier.

US-A-5,044,194 décrit un procédé de détection des ratés de combustion, consistant, pour chaque phase de combustion-détente d'un moteur, à calculer la vitesse et l'accélération de rotation du moteur, puis, sur une série de telles phases, l'accélération moyenne qui est comparée à l'accélération mesurée pour en déduire un écart d'accélération. Parallèlement, une valeur de couple de référence est obtenue par interpolation cartographique à partir de paramètres de fonctionnement du moteur, tels que régime et débit d'air d'admission. Puis on calcule un coefficient de perte de puissance égal au rapport de l'écart d'accélération sur le couple de référence. Puis le couple de référence est comparé à un seuil de couple, et s'il est supérieur à ce dernier, on effectue une seconde comparaison. Cette dernière consiste à comparer le coefficient de perte de puissance à un seuil de perte de puissance, et si ce coefficient est supérieur au seuil correspondant, on considère qu'il y a un raté de combustion. Le critère essentiel de détermination de la présence d'un raté de combustion réside dans le coefficient de perte de puissance, égal au rapport d'un écart d'accélération sur un couple de référence, et dans sa comparaison à un seuil de coefficient de perte de puissance.

JP-A-62-54138 décrit également un procédé de détection des ratés de combustion consistant à calculer un écart entre une pression mesurée au collecteur d'air d'admission et une pression de référence obtenue par interpolation cartographique à partir de valeurs détectées de la charge du moteur, puis à comparer l'écart entre la pression mesurée et la pression de référence à un seuil, pour en déduire la présence d'un raté de combustion. Dans ce procédé le critère essentiel de détermination de la présence d'un raté de combustion réside dans l'écart de pression et sa comparaison à un seuil de pression.

L'invention propose un autre procédé de détection des ratés de combustion d'un moteur à combustion interne et allumage commandé qui se caractérise en ce qu'il comprend les étapes consistant à :

a) élaborer, pour chaque phase de combustion-détente dans chaque cylindre du moteur, un signal représentatif de la valeur du couple gaz Cg produit dans le cylindre correspondant par la combustion correspondante,

b) mesurer la vitesse de rotation N du moteur et élaborer un signal représentatif de cette vitesse pendant au moins la phase d'admission ayant précédé la phase de combustion-détente du cylindre correspondant,

c) mesurer la pression Pca au collecteur d'admission d'air pour le cylindre correspondant et élaborer un signal représentatif de cette pression pendant au moins la phase d'admission ayant précédé la phase de combustion-détente au cours du même cycle moteur du cylindre correspondant,

d) entrer les signaux de vitesse N et de pression collecteur d'admission Pca en adresses dans une cartographie de couple gaz théorique de référence, et en déduire un signal représentatif d'un couple de référence C ref,

e) affecter le couple de référence C ref d'un coefficient de pondération multiplicatif associé au cylindre correspondant et au mode de fonctionnement stabilisé ou transitoire du moteur, et en déduire un signal représentatif d'un couple théorique prévu Cpr, et

f) comparer les signaux du couple gaz mesuré Cg et du couple théorique prévu Cpr et considérer qu'il y a un raté de combustion lorsque le rapport du couple gaz Cg au couple théorique prévu Cpr devient inférieur à un seuil de rapport déterminé.

Ce seuil de rapport peut être constant, par exemple égal à 0,5, mais, avantageusement, il est tiré d'une cartographie établie en fonction de la vitesse de rotation N du moteur et de la pression Pca au collecteur d'admission d'air.

On comprend que l'idée à la base de l'invention consiste à prévoir ou estimer, pour chaque phase de combustion-détente, un couple gaz théorique prévu, en fonction de la vitesse de rotation du moteur ou régime, de la pression au collecteur d'admission, et d'un coefficient de pondération, prenant en compte l'état de chacun des cylindres du moteur pour les phases de combustion-détente correspondantes, ainsi que les modes de fonctionnement transitoire ou stabilisé du moteur, et que l'on compare ensuite ce couple prévu avec le couple gaz mesuré pour la phase de combustion-détente considérée, pour en déduire s'il y a eu ou non un raté de combustion pendant cette phase, en fonction du résultat de cette comparaison, qui avantageusement est double.

En effet, pour une meilleure discrimination des ratés de combustion, on considère avantageusement qu'il y a un raté si, simultanément à la condition mentionnée en f) ci-dessus, la différence entre le couple prévu Cpr et le couple gaz Cg est supérieure à l'un ou l'autre de deux seuils d'écart déterminés selon que le moteur fonctionne en mode stabilisé ou transitoire.

Avantageusement en outre, le signal représentatif du couple gaz mesuré Cg pour chaque phase de combustion-détente dans chaque cylindre du moteur est élaboré à partir du signal de vitesse du moteur N. Cette caractéristique est avantageuse en ce qu'elle permet de calculer le couple gaz à partir du seul signal de régime N, sans qu'il soit nécessaire de prévoir d'autres moyens tels que des capteurs de pression effectuant les relevés de pression dans les chambres de combustion.

Avantageusement de plus, les signaux de couple de référence C ref sont aisément déduits d'une cartographie de couple globale pour l'ensemble des cylindres du moteur et valable pour une famille de moteurs, cette cartographie étant préétablie en régime stabilisé du moteur et mémorisée sous la forme d'une table cartographique à deux dimensions exprimant des valeurs du couple gaz théorique de référence pour différentes valeurs d'une part de la vitesse du moteur N, et, d'autre part, de la pression au collecteur d'admission Pca, lesquelles valeurs sont choisies pour optimiser le calcul du couple de référence C ref par interpolation linéaire. Les valeurs ou points de cartographie sont en effet choisis rapprochés dans les zones à fortes courbures de la cartographie pour permettre une interprétation linéaire avec des erreurs minimales.

Afin que la pondération du résultat de la cartographie permette de compenser la dispersion entre cylindres, entre moteurs ainsi que le vieillissement du moteur, le coefficient de pondération est recalculé pour chaque phase de combustion-détente du moteur. Mais ce calcul est effectué de manière différente selon que le moteur fonctionne en mode transitoire ou stabilisé, la pondération en régime stabilisé s'effectuant en fonction des résultats des cycles précédents du cylindre considéré.

Lorsque l'injection et, le cas échéant, l'allumage du moteur sont commandés par un système de contrôle moteur, on prélève avantageusement un signal représentatif du mode de fonctionnement du moteur sur une sortie de ce système, qui élabore pour ses besoins propres un tel signal de fonctionnement en mode stabilisé ou transitoire.

Mais il est également possible, parallèlement à ce système de contrôle moteur, de déterminer le mode stabilisé ou transitoire de fonctionnement du moteur en fonction de la différence, de préférence en valeur absolue, entre deux valeurs du couple de référence Cref calculées l'une pour la phase de combustion-détente considérée, et l'autre pour l'avant-dernière phase de combustion-détente précédente, et à considérer que le mode est transitoire si cette différence est supérieure à un seuil de mode déterminé, et stabilisé si cette différence est inférieure audit seuil de mode depuis un nombre déterminé de cycles moteur consécutifs.

De manière simple, en mode transitoire, on calcule le coefficient de pondération comme étant égal à la moyenne d'un nombre déterminé des derniers rapports Cg/C ref consécutifs, indépendamment des cylindres, tandis qu'en mode stabilisé ce coefficient est calculé comme étant égal à la moyenne d'un nombre déterminé des derniers rapports consécutifs Cg/C ref pour le cylindre correspondant à la phase de combustion-détente considérée, c'est-à-dire celle pour laquelle on a Cg, et on calcule le coefficient de pondération pour calculer le couple prévu à partir du couple de référence.

Ce mode d'actualisation et d'individualisation, en stabilisé, du coefficient de pondération implique une étape consistant à stocker en mémoire un nombre déterminé des dernières valeurs successives du couple gaz Cg et du couple de référence C ref nécessaires au calcul du coefficient de pondération. Mais en outre, pour ne pas introduire de valeur aberrante du couple gaz Cg, correspondant à des conditions exceptionnelles, dans le calcul du coefficient de pondération, et donc afin de ne pas fausser ce calcul, on stocke avantageusement la valeur calculée correspondante du couple prévu Cpr à la place d'une valeur du couple gaz Cg si, pour cette valeur de Cg, on détecte un raté de combustion ou si on ne détecte pas de raté mais que cette valeur de Cg est supérieure au produit de la valeur correspondante de C ref par un facteur d'amplification, par exemple constant et de préférence égal à 1,2. Ce dernier cas (Cg > 1,2 x C ref) peut se produire lors d'un passage d'obstacle, ou lors d'une phase de combustion-détente qui fait suite à un raté d'allumage s'étant produit, pour le même cylindre, au cycle moteur précédent.

Afin d'alerter le conducteur du véhicule, dont le moteur est associé à un catalyseur, le procédé consiste avantageusement de plus :

à mesurer le nombre de ratés de combustion ou leur taux détectés pendant des fenêtres glissantes de respectivement N1 et N2 tours moteur, par exemple 200 et 1000 tours,

à comparer chacune de ces mesures à au moins un seuil, propre à chaque fenêtre, et
à donner un signal d'alarme correspondant à un état critique du catalyseur en cas de dépassement du seuil propre à la fenêtre de N1 tours, et/ou un signal d'alarme correspondant à un dépassement d'un seuil d'émission de composants nocifs dans les gaz d'échappement en cas de dépassement du seuil propre à la fenêtre de N2 tours.

La détection de ratés de combustion n'étant pas fiable dans tout le domaine d'utilisation du moteur, en particulier lors de forts transitoires (par exemple manoeuvres du levier de vitesses), ou lorsque le moteur est fortement entraîné, il est avantageux que le procédé puisse permettre de désactiver la détection des ratés en phase de coupure d'injection et/ou en phase moteur entraîné. Selon l'invention, cette dernière phase est détectée avantageusement lorsque la pression au collecteur d'admission P ca devient inférieure à un seuil de pression fonction de la vitesse de rotation n du moteur et/ou lorsque le couple gaz Cg mesuré est inférieur à un couple limite, qui peut par exemple correspondre au couple gaz mesuré à couple utile nul pour une vitesse identique de rotation N du moteur.

Afin de faciliter la détection de l'état entraînant ou entraîné du moteur, le procédé comprend avantageusement l'étape supplémentaire consistant à entrer le signal de vitesse N en adresse dans une table cartographique à une dimension, exprimant les valeurs du couple limite pour différentes valeurs de la vitesse N du moteur, et à en déduire par interpolation, de préférence linéaire, un signal représentatif du couple limite Clim que l'on compare au couple gaz mesuré Cg pour en déduire que le moteur est entraînant ou entraîné selon que Cg est supérieur ou inférieur à Clim.

Pour les cas où le moteur est fortement entraîné, le procédé permet avantageusement de désactiver la détection des ratés si le couple prévu Cpr est inférieur au produit du couple limite Clim par un facteur réducteur inférieur ou égal à 1, de préférence constant et par exemple égal à 1/3.

De même, dans les cas de forts transitoires (passages de vitesses par exemple), le procédé permet de désactiver la détection des ratés si le coefficient de pondération devient inférieur à un seuil de coefficient de préférence constant et inférieur à 1, par exemple égal à 0,7.

On peut, en variante, inverser le traitement des signaux Cg et C ref, et pondérer les valeurs de Cg pour les comparer à des valeurs de C ref interpolées mais non pondérées, dans toutes les étapes du procédé selon l'invention.

On peut également substituer au signal Pca tout autre signal représentatif du remplissage unitaire des cylindres du moteur, tel qu'un signal de débit d'air d'alimentation ou d'angle d'ouverture du papillon commandant ou régulant cette alimentation en air.

L'invention a également pour objet un appareil de détection des ratés de combustion, destiné à la mise en oeuvre du procédé propre à l'invention et tel que présenté ci-dessus, et qui se caractérise en ce qu'il comprend :

au moins un capteur de vitesse de rotation du moteur, délivrant un signal de vitesse N,
au moins un capteur de pression au collecteur d'admission d'air, délivrant un signal correspondant pour chaque cylindre du moteur,
au moins un capteur de phase moteur, permettant d'identifier chaque cylindre du moteur,
des moyens de calcul du couple gaz Cg, à partir du signal de vitesse moteur N,
des moyens de mémoire, pour stocker des cartographies et des seuils, des moyens de calculs et des moyens de comparaison permettant de calculer et/ou stocker des valeurs du couple de référence C ref, du couple prévu Cpr, du coefficient de pondération, du rapport Cg/Cpr, de la différence Cpr - Cg, et de les comparer à des seuils pour déterminer la présence de ratés de combustion.

L'invention sera mieux comprise, et d'autres avantages et caractéristiques de l'invention ressortiront à la lecture de la description donnée ci-dessous, à titre non limitatif, d'un exemple de réalisation décrit en référence aux dessins annexés sur lesquels :

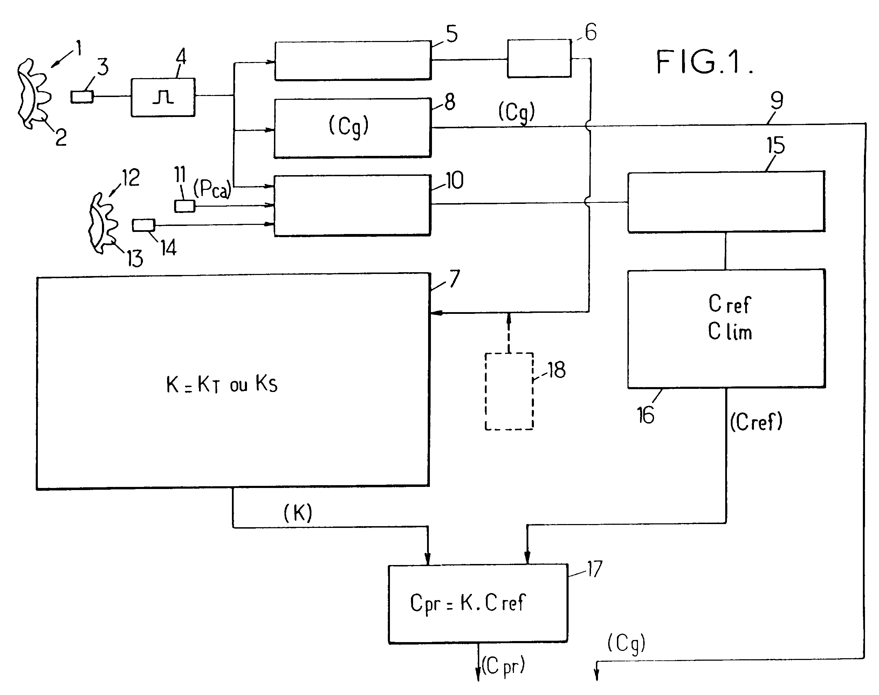

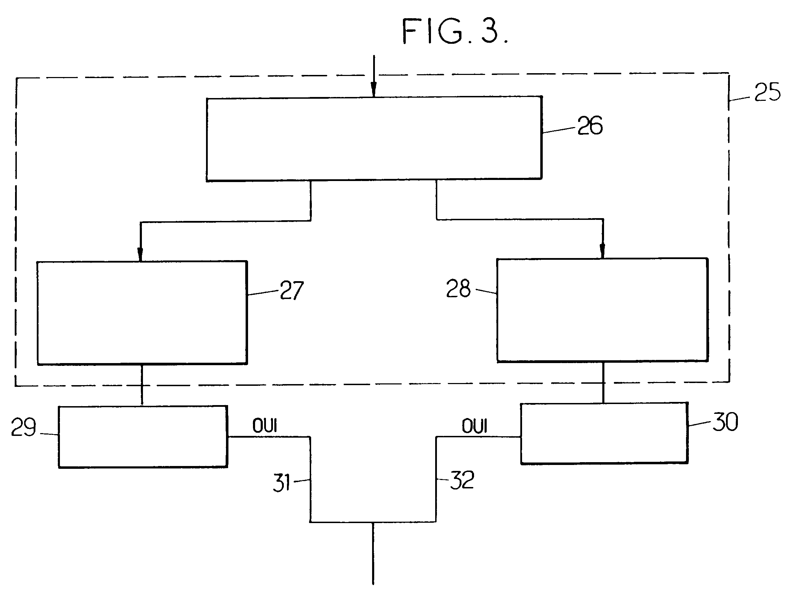

-   les figures 1 à 3 représentent les trois parties complémentaires d'un même schéma bloc représentant les étapes du procédé et les moyens utilisés pour sa mise en oeuvre, pour la détection des ratés de combustion d'un moteur à quatre cylindres et à quatre temps par cycle moteur, dont l'allumage et l'injection au moins sont commandés par un système de contrôle moteur,

Sur la figure 1, on a représenté en 1 un détecteur de vitesse ou de régime de rotation moteur, d'un type bien connu, équipant déjà la plupart des véhicules automobiles munis d'un circuit électronique de contrôle moteur et comprenant une roue dentée 2 solidaire en rotation du volant d'inertie ou du vilebrequin du moteur, ainsi qu'un capteur 3 fixé sur le moteur, le détecteur 1 étant du type à réluctance variable, dans lequel le capteur 3 est sensible au passage en regard des dents de la roue 2 et délivre un signal électrique pulsatoire de fréquence variable proportionnelle au régime du moteur, ce signal étant mis en forme dans un circuit 4 délivrant le signal de régime moteur N au reste du dispositif. En particulier, le signal de régime N est délivré à l'unité de contrôle moteur 5, commandant l'injection et l'allumage du moteur, et reliée à un étage de sortie 6 dans lequel est disponible un signal représentatif du mode de fonctionnement stabilisé ou transitoire du moteur. Ce signal (mode stabilisé ou transitoire) est envoyé à un calculateur 7 d'un coefficient de pondération K, dont la fonction est décrite ci-après.

En parallèle au contrôle moteur 5, le signal de régime N est envoyé à un étage 8 de calcul du couple gaz Cg produit par chaque phase de combustion-détente dans chaque cylindre du moteur, pour tous les cycles de ce dernier. L'étage 8, appelé capteur logiciel de couple gaz, est donc un calculateur qui calcule le couple gaz mesuré à partir du seul signal de régime N. Le moteur étant du genre comprenant des repères de mesures, tels que les dents de la roue 2, disposés sur une roue ou couronne solidaire du volant d'inertie ou du vilebrequin, des moyens, tels que des dents de largeur particulière de la roue 2, pour définir une référence d'indexation des repères, et un capteur 3 de défilement des repères, monté fixe au voisinage de la roue ou couronne 2, le circuit de traitement de signal contenu dans l'étage 8 met en oeuvre un procédé de production d'une valeur représentative du couple gaz Cg engendré par chaque combustion du mélange gazeux dans les cylindres du moteur à combustion interne, ce procédé connu par FR-A-2 681 425 comprenant les opérations suivantes :

1) l'élaboration d'une valeur primaire représentative de la durée di de défilement de chacun des repères devant le capteur 3,
2) le traitement de la valeur primaire di pour produire deux valeurs secondaires représentatives respectivement de la vitesse angulaire moyenne $\Omega m$ sur les repères au cours d'une période des combustions dans le moteur et de la projection $Ecos\Phi$, sur la ligne de référence de phase des repères afférents aux périodes angulaires de combustion, de la composante alternative E de la vitesse angulaire instantanée $\Omega i$ des repères à la fréquence des combustions dans le moteur,
3) la combinaison de ces deux valeurs secondaires suivant la relation :

$$Cg = - a.\Omega m.Ecos\Phi + b.\Omega m^2$$

et ainsi obtenir la valeur recherchée, les termes a et b étant des constantes déterminées expérimentalement.

L'étage 8 délivre ainsi sur sa sortie 9, pour chaque phase de combustion-détente dans chaque cylindre du moteur, un signal représentatif de la valeur du couple gaz Cg produit dans le cylindre correspondant par la combustion correspondante.

Parallèlement au contrôle moteur 5 et à l'étage 8, le signal de régime N est transmis à un étage de mémoire 10 comportant des registres à décalages, ayant une capacité minimum de stockage correspondant à trois phases successives du cycle moteur. Cet étage 10 reçoit également, d'un capteur correspondant 11, un signal représentatif de la pression d'air d'alimentation Pca au collecteur d'admission, ainsi qu'un signal de phase moteur, permettant d'identifier chaque cylindre, et qui est reçu d'un capteur de phase moteur 12.

Le capteur de phase moteur 12 est d'un type connu, de structure analogue à celle du détecteur de régime 1, et comprenant une roue ou couronne dentée 13 solidaire en rotation d'un arbre à cames, et dont les dents passent en regard d'un capteur 14, fixe sur le moteur.

Dans l'étage de mémorisation 10, on stocke ainsi de manière glissante les signaux de régime moteur N, de pression au collecteur d'admission Pca pour au moins les trois dernières phases successives de cycle moteur, ainsi que les numéros des cylindres correspondants. L'étage 10 est relié à un étage 15 de resynchronisation des événements, permettant de rechercher parmi les valeurs de régime N et de Pca stockées dans l'étage 10 celles qui correspondent à une phase de combustion-détente pour laquelle le calcul du couple gaz Cg est en cours dans l'étage 8. En effet, on veut comparer au couple gaz mesuré Cg un couple gaz théorique prévu calculé à partir des valeurs de régime et de Pca ayant conduit à ce couple gaz mesuré Cg. On sait que le couple gaz Cg est le résultat d'une combustion qui s'est déroulée dans la phase combustion-détente précédente, c'est-à-dire dans le demi-tour moteur précédent, pour un moteur à quatre cylindres et quatre temps. Cette combustion est fonction de la quantité de combustible injectée qui, elle-même, dépend des conditions de régime et de Pca correspondantes au cours de la phase d'admission, et en particulier au début de celle-ci, c'est-à-dire pendant le troisième demi-tour avant le calcul du couple gaz. C'est la raison pour laquelle on mesure le régime N et la pression Pca pendant la phase d'admission ou demi-tour d'admission ayant précédé le demi-tour de combustion-détente au cours du même cycle moteur du cylindre correspondant, et que l'on stocke dans l'étage 10 les valeurs mesurées pour au moins trois phases moteur successives. Donc, pour un demi-tour de compression-détente d'ordre n, on recherche, dans l'étage 15, la valeur du régime N et de la pression Pca d'ordre n-3.

A partir de l'étage 15, les valeurs de régime et de Pca d'ordre n-3 sont entrées en adresse dans une table cartographique à deux dimensions, contenue dans l'étage d'interpolation cartographique 16, cette carte à deux dimensions donnant les valeurs de couple de référence en fonction de valeurs de régime et de valeurs de Pca, qui ne sont pas équidistantes mais resserrées dans les zones de la carte du couple présentant des courbures marquées. Par interpolation linéaire, on déduit à partir des valeurs d'adressage une valeur de couple gaz théorique de référence C ref. Cette cartographie de couple de référence a été préétablie en régime stabilisé du moteur et est valable pour tous les cylindres d'un moteur ainsi que pour une famille de moteurs.

Dans le même étage 16, on entre la valeur du signal de régime N d'ordre n-3 en adresse dans une table cartographique à une dimension exprimant différentes valeurs du couple limite pour différentes valeurs du régime, le couple limite correspondant au couple gaz mesuré à couple utile nul (pour un même régime), c'est-à-dire au couple limite endessous duquel le moteur est entraîné. Par interpolation linéaire dans cette table cartographique du couple limite, on déduit, pour la valeur du régime en phase d'ordre n-3, une valeur du couple limite Clim.

Donc, dans l'étage 16, pour essayer de prévoir au mieux le couple gaz fourni par le moteur pour chaque demi-tour ou phase de combustion-détente d'ordre n, on calcule par interpolation une valeur C ref à partir des valeurs du régime N et de la Pca du demi-tour d'ordre n-3, cette interpolation étant linéaire dans la table à deux dimensions pour calculer le couple de référence C ref, et parallèlement on effectue une interpolation linéaire dans la table à une dimension exprimant le couple limite en fonction du régime, pour calculer la valeur de couple limite Clim correspondant à la valeur de régime N pour le demi-tour d'ordre n-3. Ce couple limite Clim est utilisé pour déterminer si le moteur est entraînant ou entraîné, selon que le couple gaz calculé Cg est respectivement supérieur ou inférieur à Clim.

On comprend qu'en phase transitoire, moteur entraîné, et/ou en cas d'usure du moteur, le couple de référence C ref puisse différer sensiblement du couple gaz mesuré Cg. Afin d'évaluer au mieux le couple fourni par le moteur pendant chaque demi-tour, on applique en conséquence à la valeur du couple de référence C ref correspondante un coefficient de pondération multiplicatif K. Cette opération est effectuée dans l'étage multiplicateur 17, qui reçoit le signal C ref de l'étage 16 et le coefficient K de l'étage 7. Dans ce dernier, le coefficient K est calculé de deux manières différentes, selon que le moteur fonctionne en mode stabilisé ou transitoire, ce qui lui est indiqué depuis l'étage de sortie 6 du contrôle moteur, comme indiqué précédemment.

Eventuellement, à la place de l'étage de sortie 6, un signal représentatif de l'état stabilisé ou transitoire de fonctionnement du moteur peut être communiqué à l'étage 7 par l'étage 18, dans lequel on effectue le test suivant : on considère la valeur du couple de référence C ref pour le demi-tour en cours, d'ordre n, et pour le demi-tour antérieur d'ordre n-2. Si la valeur absolue de la différence entre ces deux valeurs de C ref est supérieure à un seuil S1, par exemple égal à 3 N.m, on considère que le moteur est dans un état transitoire. Par contre, si la valeur absolue de la différence entre ces deux valeurs de C ref est inférieure au seuil S1, depuis au moins un nombre déterminé des derniers demi-tours consécutifs, par exemple depuis au moins seize demi-tours, qui correspondent à quatre cycles moteurs, alors on considère que le moteur est dans un état stabilisé.

Lorsque l'étage 7 reçoit un signal indiquant un état transitoire du moteur, il calcule le coefficient de pondération K comme étant égal à la moyenne d'un nombre déterminé des derniers rapports Cg/C ref, par exemple une moyenne des quatre derniers rapports, d'ordre n-4, n-3, n-2 et n-1, indépendamment des cylindres.

Donc, en transitoire, le coefficient K est donné par la formule :

$$K \, T = 1/4 \, [Cg \, n\text{-}4 \, /C \, ref \, n\text{-}4 + Cg \, n\text{-}3/C \, ref \, n\text{-}3 + Cg \, n\text{-}2/C \, ref \, n\text{-}2 + Cg \, n\text{-}1/C \, ref \, n\text{-}1]$$

Par contre, en stabilisé, K est une moyenne par exemple des quatre derniers rapports Cg/C ref pour chaque cylindre considéré. Cela permet de prendre en compte les disparités entre cylindres et d'améliorer la précision du couple gaz théorique prévu Cpr calculé dans l'étage 17 en multipliant C ref par K. Cela permet également de tenir compte des particularités de la roue ou couronne dentée 2 du détecteur 1 de la vitesse de rotation, par exemple des dissymétries des dents de largeur particulière définissant une référence d'indexation des repères.

En stabilisé, pour un cylindre considéré, le rapport Cg/C ref le plus ancien a été calculé pour le demi-tour d'ordre n-16, puisque le moteur est à quatre cylindres et que l'on considère la moyenne des quatre derniers rapports par cylindre. Le coefficient K en stabilisé est donc donné par la formule :

$$KS = 1/4 \, [Cg \, n\text{-}16/C \, ref \, n\text{-}16 + Cg \, n\text{-}12/C \, ref \, n\text{-}12 + Cg \, n\text{-}8/C \, ref \, n\text{-}8 + Cg \, n\text{-}4/C \, ref \, n\text{-}4]$$

Pour pouvoir calculer K, il est donc nécessaire, pendant les seize premiers demi-tours après le démarrage du moteur, de stocker Cg et C ref en mémoire. Cette phase d'initialisation étant terminée, on peut seulement ensuite calculer K dans l'étage 7, puis calculer le couple théorique prévu Cpr dans l'étage 17.

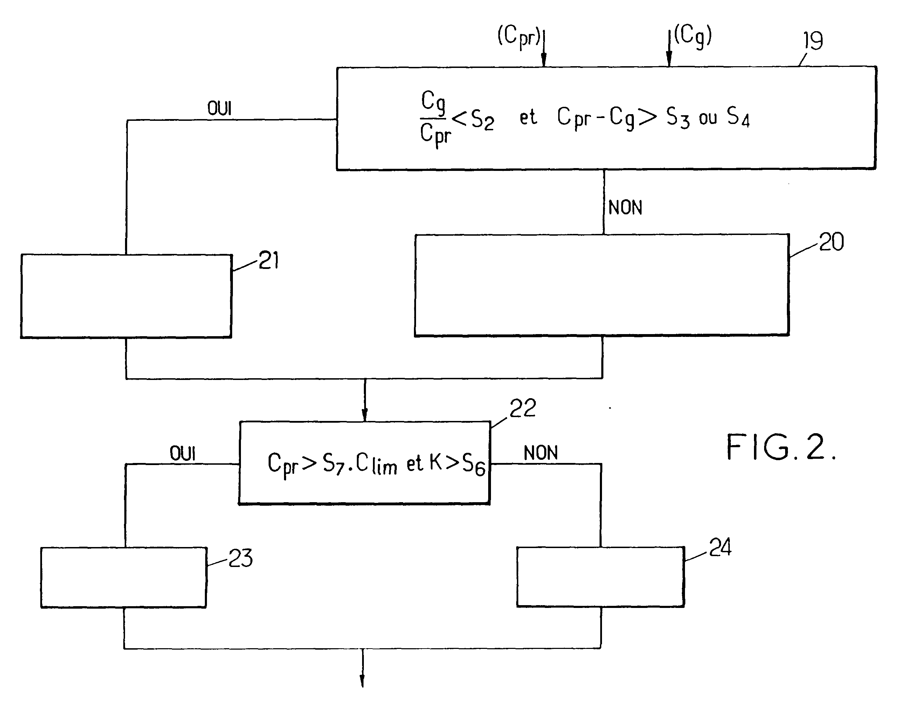

Les valeurs de Cg et de Cpr ayant ainsi été obtenues, on les transmet à l'étage de tests 19 (voir figure 2) où l'on effectue la recherche d'un raté de combustion par comparaison entre ces deux valeurs.

Cette comparaison est double : elle consiste d'une part à calculer le rapport Cg/Cpr et à le comparer à un seuil S2 prédéterminé et mémorisé dans 19, S2 étant inférieur à 1, et pouvant être constant, par exemple égal à 0,5, dans une variante simplifiée du procédé. Mais, dans le meilleur mode de réalisation connu du demandeur, le seuil S2 est tiré d'une table cartographique établie en fonction du régime moteur N et de la pression au collecteur d'admission Pca. D'autre part, on compare la différence Cpr - Cg à un seuil prédéterminé d'écart minimum S3, par exemple constant et égal à 4 N.m en régime stabilisé, et à un autre seuil prédéterminé d'écart minimum S4, supérieur au seuil S3, par exemple également constant et égal à 15 N.m en régime transitoire, les seuils S3 et S4 étant également mémorisés dans l'étage 19. En variante, S3 et S4 sont des fonctions du couple de référence C ref.

On considère qu'il y a un raté de combustion si, simultanément, Cg/Cpr est inférieur à S2 et Cpr - Cg est supérieur à S3 ou S4, selon que le moteur fonctionne en régime stabilisé ou transitoire.

Si ces deux conditions ne sont pas simultanément vérifiées, on détecte dans l'étage 20 une absence de raté, et on stocke en mémoire les valeurs C ref et Cg de cette phase d'ordre n, sauf si Cg est supérieur au produit de Cref par un coefficient d'amplification S5 supérieur à 1, par exemple constant et égal à 1,2, ce qui correspond par exemple à un passage d'obstacle ou à une combustion améliorée, faisant suite à un raté de combustion au cycle moteur précédent pour le même cylindre, auquel cas on stocke la valeur correspondante du couple théorique prévu Cpr à la place de Cg.

Si les deux conditions testées dans l'étage 19 sont simultanément vérifiées, on détecte un raté de combustion dans l'étage 21, dans lequel on stocke en mémoire la valeur de C ref ainsi que celle de Cpr à la place de Cg pour cette phase d'ordre n, afin de ne pas délibérément fausser le calcul suivant du coefficient de pondération K, puisque les mémorisations dans les étages 20 et 21 sont pris en compte dans l'étage 7 à cet effet.

Qu'il y ait ou non détection d'un raté en phase n, on recherche dans l'étage 22 si le moteur est entraînant et si l'on ne se trouve pas dans l'une des trois conditions, qui conduisent à une désactivation de la détection, ces trois conditions étant une coupure d'injection, un coefficient de pondération K inférieur à un seuil prédéterminé S6 inférieur à 1, par exemple constant et égal à 0,7, et un rapport Cpr/Clim inférieur à un seuil prédéterminé S7, inférieur à 1, par exemple constant et égal à 1/3, les seuils S6 et S7 étant mémorisés dans 22. Si aucune de ces trois conditions de désactivation n'est vérifiée en 22, on valide en 23 la détection effectuée. Dans le cas contraire, on invalide la détection du raté, ce qui correspond à une désactivation de la détection, dans l'étage 24.

Les résultats des détections (présence ou absence de ratés) sont transmis à un étage 25 dit de "fenêtrage", dans lequel on stocke en 26 les résultats de détection pour toutes les phases de combustion-détente des 1000 derniers tours moteur, c'est-à-dire les résultats de détection des 2000 derniers demi-tours moteur. Ces résultats sont traités, d'une part, dans une fenêtre glissante de 200 tours moteur 27, dans laquelle on calcule le taux de ratés, en pourcentage, pendant les 200 derniers tours moteur, c'est-à-dire dans les détections effectuées pendant les 400 derniers demi-tours. D'autre part, ces résultats de détection sont traités dans une fenêtre glissante de 1000 tours moteur 28, où on calcule de manière analogue, en pourcentage, le taux de ratés dans les détections effectuées sur les 2000 derniers demi-tours moteur.

Le pourcentage calculé en 27 dans la fenêtre de 200 tours est comparé, dans le comparateur 29, à un seuil S8, prédéterminé et constant, dont le dépassement conduit à l'émission en 31 d'un signal d'alarme témoignant de la dégradation du catalyseur.

De même, le pourcentage mesuré en 28 sur la fenêtre de 1000 tours est comparé, dans le comparateur 30, à un seuil d'émission S9, constant et par exemple de l'ordre de 1,5 %, le dépassement de ce seuil étant indiqué par un signal d'alerte en 32, témoignant d'un taux de composants nocifs dans les gaz d'échappement trop important. Ces signaux d'alarme peuvent par exemple provoquer l'allumage d'une lampe au tableau de bord du véhicule.

En variante, on peut, dans le procédé et l'appareil décrit ci-dessus, inverser le traitement appliqué aux valeurs de Cg et C ref, et donc pondérer les valeurs du couple de gaz Cg pour les comparer à des valeurs du couple de référence interpolées mais non pondérées.

Eventuellement, chacune des deux variables Cg et Cref peut être pondérée d'une manière qui lui est spécifique avant leur comparaison.

Dans une autre variante, on peut substituer à la prise en compte de la pression au collecteur d'admission d'air Pca, la prise en compte de tout autre signal représentatif du remplissage unitaire des cylindres du moteur, par exemple un signal de débit d'air d'alimentation, ou un signal d'angle d'ouverture de l'obturateur rotatif ou papillon commandant ou régulant l'alimentation en air du moteur.

**Revendications**

1. Procédé de détection des ratés de combustion d'un moteur à combustion interne et allumage commandé, caractérisé en ce qu'il comprend les étapes consistant à :

   a) élaborer (8), pour chaque phase de combustion-détente dans chaque cylindre du moteur, un signal représentatif de la valeur du couple gaz (Cg) produit dans le cylindre correspondant par la combustion correspondante,
   b) mesurer (1) la vitesse de rotation (N) du moteur et élaborer (4) un signal représentatif de cette vitesse pendant au moins la phase d'admission ayant précédé la phase de combustion-détente du cylindre correspondant,
   c) mesurer (11) la pression (Pca) au collecteur d'admission d'air pour le cylindre correspondant et élaborer un signal représentatif de cette pression pendant au moins la phase d'admission ayant précédé la phase de combustion-détente au cours du même cycle moteur du cylindre correspondant,
   d) entrer les signaux de vitesse (N) et de pression collecteur d'admission (Pca) en adresses dans une cartographie (16) de couple gaz théorique de référence, et en déduire un signal représentatif d'un couple de référence (Cref),

e) affecter (17) le couple de référence (C ref) d'un coefficient de pondération multiplicatif (K) associé au cylindre correspondant et/ou au mode de fonctionnement stabilisé ou transitoire du moteur, et en déduire un signal représentatif d'un couple théorique prévu (Cpr), et

f) comparer (19) les signaux du couple gaz mesuré (Cg) et du couple théorique prévu (Cpr) et considérer qu'il y a un raté de combustion lorsque le rapport du couple gaz (Cg) au couple théorique prévu (Cpr) devient inférieur à un seuil de rapport déterminé (S2).

2. Procédé selon la revendication 1, caractérisé en ce qu'il consiste à tirer le seuil de rapport déterminé (S2) d'une cartographie établie en fonction de la vitesse de rotation (N) du moteur et de la pression (Pca) au collecteur d'admission d'air.

3. Procédé selon l'une des revendications 1 et 2, caractérisé en ce qu'il comprend l'étape consistant à considérer qu'il y a raté de combustion si, simultanément à l'étape f), la différence entre le couple prévu (Cpr) et le couple gaz (Cg) est supérieure à l'un ou l'autre de deux seuils d'écart déterminés (S3, S4) selon que le moteur fonctionne en mode stabilisé ou transitoire.

4. Procédé selon l'une quelconque des revendications 1 à 3, caractérisé en ce qu'il comprend l'étape consistant de plus à élaborer (8) le signal représentatif du couple gaz mesuré (Cg) à partir du signal de vitesse du moteur (N).

5. Procédé selon l'une quelconque des revendications 1 à 4, caractérisé en ce qu'il comprend l'étape consistant à déduire les signaux de couple de référence (C ref) d'une cartographie (16) de couple globale pour l'ensemble des cylindres du moteur et valable pour une famille de moteurs, cette cartographie étant préétablie en régime stabilisé du moteur et mémorisée sous la forme d'une table cartographique à deux dimensions exprimant des valeurs du couple gaz théorique de référence pour différentes valeurs d'une part de la vitesse du moteur (N), et, d'autre part, de la pression au collecteur d'admission (Pca), lesquelles valeurs sont choisies pour optimiser le calcul du couple de référence (C ref) par interpolation linéaire.

6. Procédé selon l'une quelconque des revendications 1 à 5, caractérisé en ce qu'il comprend l'étape consistant à recalculer (7) le coefficient de pondération (K) pour chaque phase de combustion-détente du moteur, et de manière différente selon que le moteur fonctionne en mode stabilisé ou transitoire (6, 18).

7. Procédé selon la revendication 6, caractérisé en ce qu'il comprend l'étape consistant à calculer (7) le coefficient de pondération (K) comme étant égal, en mode transitoire, à la moyenne (KT) d'un nombre déterminé des derniers rapports Cg/C ref consécutifs, indépendamment des cylindres, et, en mode stabilisé, comme étant égal à la moyenne (KS) d'un nombre déterminé des derniers rapports consécutifs Cg/C ref pour le cylindre correspondant à la phase de combustion-détente considérée.

8. Procédé selon l'une des revendications 6 et 7, caractérisé en ce qu'en mode transitoire, le coefficient de pondération (KT) est calculé selon la formule :

$$K_T = 1/4 \ [Cg_{n-4}/C\ ref_{n-4} + Cg_{n-3}/C\ ref_{n-3} + Cg_{n-2}/C\ ref_{n-2} + Cg_{n-1}/C\ ref_{n-1}]$$

où "n" indique l'ordre de la phase de combustion-détente considérée, et pour un moteur à 4 cylindres.

9. Procédé selon l'une des revendications 6 et 7, caractérisé en ce qu'en mode stabilisé, le coefficient de pondération (KS) est calculé selon la formule :

$$KS = 1/4 \ [Cg_{n-16}/C\ ref_{n-16} + Cg_{n-12}/C\ ref_{n-12} + Cg_{n-8}/C\ ref_{n-8} + Cg_{n-4}/C\ ref_{n-4}]$$

où "n" indique l'ordre de la phase de combustion-détente considérée, et pour un moteur à 4 cylindres.

10. Procédé selon l'une quelconque des revendications 6 à 9, caractérisé en ce qu'il comprend l'étape consistant, pour déterminer si le moteur fonctionne en mode stabilisé ou transitoire, à utiliser un signal représentatif du mode de fonctionnement (6) et fourni par un système de contrôle moteur (5) commandant l'injection et le cas échéant l'allumage du moteur.

11. Procédé selon l'une quelconque des revendications 6 à 10, caractérisé en ce qu'il comprend l'étape consistant à déterminer (18) le mode stabilisé ou transitoire de fonctionnement du moteur en fonction de la différence, de préférence en valeur absolue, entre deux valeurs du couple de référence (C ref) calculées l'une pour la phase de combustion-détente considérée, et l'autre pour l'avant-dernière phase de combustion-détente précédente, et à considérer que le mode est transitoire si cette différence est supérieure à un seuil de mode déterminé (S1), par exemple égal à 3 N.m, et stabilisé si cette différence est inférieure audit seuil de mode (S1) depuis un nombre déterminé de cycles moteur consécutifs.

12. Procédé selon l'une quelconque des revendications 7 à 9, caractérisé en ce qu'il comprend l'étape consistant à stocker en mémoire (20, 21) un nombre déterminé des dernières valeurs successives du couple gaz (Cg) et du couple de référence (C ref) nécessaires au calcul du coefficient de pondération (K), et à stocker la valeur calculée correspondante du couple prévu (Cpr) à la place d'une valeur du couple gaz (Cg) si, pour cette valeur de (Cg), on détecte un raté de combustion ou si on ne détecte pas de raté mais que cette valeur de (Cg) est supérieure au produit de la valeur correspondante de (C ref) par un facteur d'amplification (S5), par exemple constant et de préférence égal à 1,2.

13. Procédé selon l'une quelconque des revendications 1 à 12, pour moteur équipé d'un catalyseur, caractérisé en ce qu'il comprend l'étape consistant de plus :

à mesurer (27, 28) le nombres de ratés de combustion ou leur taux détectés pendant des fenêtres glissantes de respectivement N1 et N2 tours moteur, par exemple 200 et 1000 tours,
à comparer (29, 30) chacune de ces mesures à au moins un seuil (S8, S9), propre à chaque fenêtre, et
à donner un signal d'alarme (31) correspondant à un état critique du catalyseur en cas de dépassement du seuil (S8) propre à la fenêtre (27) de N1 tours, et/ou un signal d'alarme (32) correspondant à un dépassement d'un seuil d'émission de composants nocifs dans les gaz d'échappement en cas de dépassement du seuil (S9) propre à la fenêtre (28) de N2 tours.

14. Procédé selon l'une quelconque des revendications 1 à 13, caractérisé en ce qu'il comprend l'étape consistant à désactiver la détection des ratés en phase de coupure d'injection et/ou en phase moteur entraîné, cette dernière phase étant détectée lorsque la pression au collecteur d'admission (P ca) devient inférieure à un seuil de pression fonction de la vitesse de rotation (N) du moteur et/ou lorsque le couple gaz (Cg) mesuré est inférieur à un couple limite, qui peut par exemple correspondre au couple gaz mesuré à couple utile nul pour une vitesse identique de rotation (N) du moteur.

15. Procédé selon la revendication 14, caractérisé en ce qu'il comprend l'étape consistant à entrer le signal de vitesse (N) en adresse dans une table cartographique (16) à une dimension, exprimant les valeurs du couple limite pour différentes valeurs de la vitesse (N) du moteur, et à en déduire par interpolation, de préférence linéaire, un signal représentatif du couple limite (Clim) que l'on compare au couple gaz mesuré (Cg) pour en déduire que le moteur est entraînant ou entraîné selon que (Cg) est supérieur ou inférieur à (Clim).

16. Procédé selon la revendication 15, caractérisé en ce qu'il comprend l'étape consistant à désactiver (22, 24) la détection des ratés si le couple prévu (Cpr) est inférieur au produit du couple limite (Clim) par un facteur réducteur (S7) inférieur ou égal à 1, de préférence constant et par exemple égal à 1/3.

17. Procédé selon l'une quelconque des revendications 15 et 16, caractérisé en ce qu'il comprend l'étape consistant à désactiver (22, 24) la détection des ratés si le coefficient de pondération (K) devient inférieur à un seuil de coefficient (S6), de préférence constant et inférieur à 1, par exemple égal à 0,7.

18. Procédé selon l'une quelconque des revendications 1 à 17, caractérisé en ce qu'il consiste à substituer au signal (Pca) tout autre signal représentatif du remplissage unitaire des cylindres du moteur, tel qu'un signal de débit d'air ou d'angle d'ouverture d'un papillon de commande ou de régulation d'alimentation en air.

19. Procédé selon l'une quelconque des revendications 1 à 18, caractérisé en ce qu'il consiste à inverser le traitement des signaux de couple gaz (Cg) et de couple de référence (Cref), et à pondérer les valeurs du couple gaz (Cg) pour les comparer à des valeurs du couple de référence (Cref) interpolées mais non pondérées, dans les étapes de comparaison correspondantes du procédé.

20. Appareil de détection des ratés de combustion d'un moteur à combustion interne et allumage commandé, pour la mise en oeuvre du procédé selon l'une quelconque des revendications 1 à 19 précédentes, caractérisé en ce qu'il comprend :

au moins un capteur (1) de vitesse de rotation du moteur, délivrant un signal de vitesse (N),
au moins un capteur (11) de pression au collecteur d'admission d'air, délivrant un signal (Pca) correspondant pour chaque cylindre du moteur,
au moins un capteur de phase moteur (12), permettant d'identifier chaque cylindre du moteur,
des moyens de calcul (8) du couple gaz (Cg), à partir du signal de vitesse moteur (N),
des moyens de mémoire (16, 17, 19), pour stocker des cartographies et des seuils, des moyens de calculs (7, 17, 19) et des moyens de comparaison (19, 22) permettant de calculer et/ou stocker des valeurs du couple de référence (C ref), du couple prévu (Cpr), du coefficient de pondération (K), du rapport Cg/Cpr, de la différence Cpr - Cg, et de les comparer à des seuils (S2, S3, S4) pour déterminer la présence de ratés de combustion (21, 23).

## Patentansprüche

1. Verfahren zur Ermittlung von Fehlzündungen eines Verbrennungsmotors mit Funkenzündung, dadurch gekennzeichnet, daß es die folgenden Schritte umfaßt:

   a) Bereitstellen (8) eines Signals, das den Wert des Gasmoments (Cg) wiedergibt, das in dem entsprechenden Zylinder durch die entsprechende Verbrennung erzeugt wird, für jede Verbrennungsentspannungsphase in jedem Zylinder des Motors,
   b) Messen (1) der Drehzahl (N) des Motors und Bereitstellen (4) eines Signals, das diese Drehzahl während wenigstens der Ansaugphase wiedergibt, die der Verbrennungsentspannungsphase des entsprechenden Zylinders vorausgeht,
   c) Messen (11) des Drucks (Pca) im Ansaugluftkrümmer für den entsprechenden Zylinder und Bereitstellen eines Signals, das diesen Druck während wenigstens der Ansaugphase wiedergibt, die der Verbrennungsentspannung im Lauf desselben Motorzyklus des entsprechenden Zylinders vorausgeht,
   d) Eintragen der Drehzahlsignale (N) und des Ansaugkrümmerdrucks (Pca) als Adressen in ein theoretisches Bezugsgasmoment-Verzeichnis (16) und Herleiten eines für ein Bezugsmoment repräsentatives Signal (C ref) davon,
   e) Zuordnen (17) des Bezugsmoments (C ref) eines multiplikativen Wichtungskoeffizienten (K), der einem entsprechenden Zylinder und/oder der stabilisierten oder Übergangsbetriebsart des Motors zugeordnet ist, und Herleiten eines Signals, das für ein vorbestimmtes theoretisches Moment (Cpr) repräsentativ ist, daraus, und
   f) Vergleichen (19) der Signale des gemessenen Gasmoments (Cg) mit dem vorbestimmten theoretischen Moment (Cpr) und in Betracht ziehen, daß eine Fehlzündung vorliegt, wenn das Verhältnis des Gasmoments (Cg) zum vorbestimmten theoretischen Moment (Cpr) kleiner wird als ein vorbestimmter Verhältnis-Sollwert (S2).

2. Verfahren nach Anspruch 1, dadurch gekennzeichnet, daß es darin besteht, den vorbestimmten Verhältnis-Sollwert (S2) aus einem Verzeichnis zu ermitteln, das als Funktion der Drehzahl (N) des Motors und des Drucks (Pca) im Ansaugluftkrümmer festgelegt ist.

3. Verfahren nach Anspruch 1 oder 2, dadurch gekennzeichnet, daß es den Schritt umfaßt, der darin besteht, gleichzeitig mit dem Schritt f) in Betracht zu ziehen, daß eine Fehlzündung vorliegt, wenn die Differenz zwischen dem vorbestimmten Moment (Cpr) und dem Gasmoment (Cg) größer ist als der eine oder der andere von zwei vorbestimmten Abweichung-Sollwerten (S3, S4), wenn der Motor in der stabilisierten oder in der Übergangsbetriebsart arbeitet.

4. Verfahren nach einem der Ansprüche 1 bis 3, dadurch gekennzeichnet, daß es den Schritt umfaßt, der darin besteht, daß das für das gemessene Gasmoment (Cg) repräsentative Signal außerdem ausgehend vom Signal des Motordrehmoments (N) bereitgestellt wird.

5. Verfahren nach einem der Ansprüche 1 bis 4, dadurch gekennzeichnet, daß es den Schritt umfaßt, der darin besteht, die Bezugsmomentsignale (C ref) eines globalen Momentverzeichnisses (16) für die Gesamtheit der Motorzylinder und für eine Familie von Motoren gültig herzuleiten, wobei dieses Verzeichnis im stabilisierten Betriebszustand des Motors vorangelegt und in Form eines zweidimensionalen Tabellenverzeichnisses abgespeichert ist, das die Werte des theoretischen Bezugsgasmoments für unterschiedliche Werte einerseits der Motordrehzahl (N) und andererseits des Drucks (Pca) im Ansaugkrümmer ausdrückt, welche Werte gewählt sind, um die Berechnung des Bezugsmoments (C ref) durch lineare Interpolation zu optimieren.

6. Verfahren nach einem der Ansprüche 1 bis 5, dadurch gekennzeichnet, daß es den Schritt umfaßt, bestehend aus dem Wiederberechnen (7) des Wichtungskoeffizienten (K) für jede Verbrennungsentspannungsphase des Motors sowie unterschiedlich in Abhängigkeit davon, ob der Motor in der stabilisierten oder in der Übergangsbetriebsart (6, 18) arbeitet.

7. Verfahren nach Anspruch 6, dadurch gekennzeichnet, daß es den Schritt umfaßt, der darin besteht, den Wichtungskoeffizienten (K) in der Übergangsbetriebsart als gleich dem Mittel (KT) einer Zahl zu bestimmen, die durch die letzten fortlaufenden Verhältnisse Cg/C ref unabhängig von den Zylindern festgelegt ist, und in der stabilisierten Betriebsart als gleich dem Mittel (KS) einer Zahl, die von den letzten aufeinanderfolgenden Verhältnissen Cg/C ref für den Zylinder festgelegt ist, welcher der in Betracht gezogenen Verbrennungsentspannungsphase entspricht.

8. Verfahren nach Anspruch 6 oder 7, dadurch gekennzeichnet, daß der Wichtungskoeffizient (KT) in der Übergangsbetriebsart gemäß folgender Formel berechnet wird:

$$KT = 1/4 \, [\text{Cg } n\text{-}4/\text{C ref } n\text{-}4 + \text{Cg } n\text{-}3/\text{C ref } n\text{-}3 + \text{Cg } n\text{-}2/\text{C ref } n\text{-}2 + \text{Cg } n\text{-}1/\text{C ref } n\text{-}1]$$

wobei "n" die Reihenfolge der in Betracht gezogenen Verbrennungsentspannungsphase für einen Vierzylindermotor bezeichnet.

9. Verfahren nach Anspruch 6 oder 7, dadurch gekennzeichnet, daß der Wichtungskoeffizient (KS) in der stabilisierten Betriebsart gemäß folgender Formel berechnet wird:

$$KS = 1/4 \, [\text{Cg } n\text{-}16/\text{C ref } n\text{-}16 + \text{Cg } n\text{-}12/\text{C ref } n\text{-}12 + \text{Cg } n\text{-}8/\text{C ref } n\text{-}8 + \text{Cg } n\text{-}4/\text{C ref } n\text{-}4]$$

wobei "n" die Reihenfolge der in Betracht gezogenen Verbrennungsentspannungsphase für einen Vierzylindermotor bezeichnet.

10. Verfahren nach einem der Ansprüche 6 bis 9, dadurch gekennzeichnet, daß es den Schritt umfaßt, der darin besteht, daß zum Ermitteln, ob der Motor in der stabilisierten oder in der Übergangsbetriebsart arbeitet, ein Signal verwendet wird, das für die Betriebsart (6) repräsentativ ist und durch ein Motorsteuersystem (5) geliefert wird, das die Einspritzung und gegebenenfalls die Zündung des Motors steuert.

11. Verfahren nach einem der Ansprüche 6 bis 10, dadurch gekennzeichnet, daß es den Schritt umfaßt, der darin besteht, die stabilisierte oder die Übergangsbetriebsart des Motors als Funktion der Differenz, bevorzugt der Absolutwertdifferenz zwischen zwei Werten des Bezugsmoments (C ref), die zum einen für die in Betracht gezogene Verbrennungsentspannungsphase und zum anderen für die vorletzte vorausgehende Verbrennungsentspannungsphase berechnet sind, zu ermitteln (18) und in Betracht zu ziehen, daß es sich bei der Betriebsart um eine Übergangsbetriebsart handelt, wenn diese Differenz größer als ein ermittelter Betriebsart-Sollwert (S1) ist, der beispielsweise gleich 3 Nm ist, und daß es sich um die stabilisierte Betriebsart handelt, wenn diese Differenz kleiner als dieser Betriebsart-Sollwert (S1) ist, ausgehend von einer festgelegten Zahl aufeinanderfolgender Motorzyklen.

12. Verfahren nach einem der Ansprüche 7 bis 9, dadurch gekennzeichnet, daß es den Schritt umfaßt, der darin besteht, in einem Speicher (20, 21) eine Zahl zu speichern, die aus den letzten aufeinanderfolgenden Werten des Gasmoments (Cg) und dem Bezugsmoment (C ref) ermittelt ist, die zur Berechnung des Wichtungskoeffizienten (K) benötigt werden, und den berechneten Wert entsprechend dem vorbestimmten Moment (Cpr) an dem Ort eines Werts des Gasmoments (Cg) zu speichern, wenn für diesen Wert (Cg) eine Fehlzündung ermittelt wird, oder wenn keine Fehlzündung ermittelt wird, jedoch dieser Wert (Cg) größer ist als das Produkt des entsprechenden Werts (C ref) mit einem Verstärkungsfaktor (S5), der beispielsweise konstant und bevorzugt gleich 1,2 ist.

13. Verfahren nach einem der Ansprüche 1 bis 12 für einen mit einem Katalysator ausgerüsteten Motor, dadurch gekennzeichnet, daß es außerdem die Schritte umfaßt:

Messen (27, 28) der Anzahl der Fehlzündungen oder ihre Häufigkeit, die während sich verschiebender Motordrehzahlfenster N1 und N2, beispielsweise 200 und 1000 Touren, ermittelt werden,
Vergleichen (29, 30) eines jeden dieser Meßwerte mit wenigstens einem Sollwert (S8, S9), der zu jedem Fenster gehört, und
Abgeben eines Alarmsignals (31) entsprechend einem kritischen Zustand des Katalysators im Fall, daß ein Sollwert (S8) überschritten wird, der zum Fenster (27) von N1-Touren gehört, und/oder ein Alarmsignal (32) entsprechend einem Überschreiten eines Emissionssollwerts schädlicher Bestandteile in dem Auspuffgas im Fall, daß ein Sollwert (S9) überschritten wird, der zum Fenster (28) mit N2-Touren gehört.

14. Verfahren nach einem der Ansprüche 1 bis 13, dadurch gekennzeichnet, daß es den Schritt umfaßt, der darin besteht, die Ermittlung der Fehlzündungen in der Einspritz-Unterbrechungsphase und/oder in der Motorantriebsphase außer Kraft zu setzen, wobei die zuletzt genannte Phase ermittelt wird, wenn der Druck (Pca) im Ansaugluftkrümmer kleiner als ein Druck-Sollwert als Funktion des Drehzahls (N) des Motors wird, und/oder wenn das gemessene Gasmoment (Cg) kleiner ist als ein Grenzmoment, das beispielsweise einem gemessenen Gasmoment bei einem Nutzmoment Null für eine Drehzahl entspricht, die identisch mit der Drehzahl (N) des Motors ist.

15. Verfahren nach Anspruch 14, dadurch gekennzeichnet, daß es den Schritt umfaßt, der darin besteht, das Drehzahlsignal (N) als Adresse in eine Verzeichnistabelle (16) mit einer Größe einzutragen, welche die Werte des Grenzmoments für unterschiedliche Drehzahlen (N) des Motors ausdrückt, und daraus, durch Interpolation, bevorzugt durch lineare Interpolation, ein Signal herzuleiten, das für das Grenzmoment (Clim) repräsentativ ist, das mit dem gemessenen Gasmoment (Cg) verglichen wird, um daraus herzuleiten, daß der Motor antreibt bzw. angetrieben wird, wenn das gemessene Gasmoment (Cg) größer bzw. kleiner als das Grenzmoment (Clim) ist.

16. Verfahren nach Anspruch 15, dadurch gekennzeichnet, daß es den Schritt umfaßt, der darin besteht, die Ermittlung der Fehlzündungen auszusetzen (22, 24), wenn das vorbestimmte Moment (Cpr) kleiner ist als das Produkt aus dem Grenzmoment (Clim) mit einem Reduktionsfaktor (S7), der kleiner oder gleich 1, bevorzugt konstant und beispielsweise gleich 1/3 ist.

17. Verfahren nach Anspruch 15 oder 16, dadurch gekennzeichnet, daß es den Schritt umfaßt, der darin besteht, die Ermittlung der Fehlzündungen auszusetzen (22, 24), wenn der Wichtungskoeffizient (K) kleiner wird als ein Koeffizient-Sollwert (S6), der bevorzugt konstant und kleiner als 1, beispielsweise gleich 0,7 ist.

18. Verfahren nach einem der Ansprüche 1 bis 17, dadurch gekennzeichnet, daß es darin besteht, das Signal (Pca) durch ein beliebiges anderes Signal zu ersetzen, das die Einheitsfüllung der Motorzylinder repräsentiert, wie beispielsweise ein Luftmengensignal oder ein Öffnungswinkelsignal einer Luftzufuhrsteuer- oder -regelklappe.

19. Verfahren nach einem der Ansprüche 1 bis 18, dadurch gekennzeichnet, daß es darin besteht, die Verarbeitung der Signale des Gasmoments (Cg) und des Bezugsmoments (C ref) umzukehren und die Werte des Gasmoments (Cg) zu wichten, um sie mit den Werten des Bezugsmoments (C ref), die interpoliert, jedoch nicht gewichtet sind, in den entsprechenden Vergleichsschritten des Verfahrens zu vergleichen.

20. Vorrichtung zur Ermittlung von Fehlzündungen eines Verbrennungsmotors mit Funkenzündung zur Durchführung des Verfahrens nach einem der vorangehenden Ansprüche 1 bis 19, dadurch gekennzeichnet, daß sie aufweist:

wenigstens einen Drehzahlfühler (1) für den Motor, der ein Drehzahlsignal (N) liefert,
wenigstens einen Ansaugluftkrümmer-Druckfühler (11), der ein entsprechendes Signal (Pca) für jeden Motorzylinder liefert,
wenigstens einen Motorphasenfühler (12), der es erlaubt, jeden Motorzylinder zu identifizieren,
Berechnungsmittel (8) für das Gasmoment (Cg), ausgehend vom Drehzahlsignal (N),
Speichermittel (16, 17, 19) zum Speichern von Verzeichnissen und Sollwerten, Berechnungsmittel (7, 17, 19) und Vergleichsmittel (19, 22), die es erlauben, die Werte des Bezugsmoments (C ref), des vorbestimmten Moments (Cpr), des Wichtungskoeffizienten (K), des Verhältnisses (Cg/Cpr) und der Differenz Cpr - Cg zu berechnen und/oder zu speichern, und sie mit den Sollwerten (S2, S3, S4) zu vergleichen, um das Auftreten von Fehlzündungen (21, 23) zu ermitteln.

## Claims

1. Method of detecting misfires in a controlled ignition internal combustion engine, characterized in that it comprises the stages consisting in:

a) deriving (8), for each combustion-expansion phase in each cylinder of the engine, a signal representative of the value of the gas torque (Cg) produced in the corresponding cylinder by the corresponding combustion,

b) measuring (1) the rotational speed (N) of the engine and deriving (4) a signal representative of this speed during at least the intake phase preceding the combustion-expansion phase of the corresponding cylinder,

c) measuring (11) the pressure (Pca) at the air inlet manifold for the corresponding cylinder, and deriving a signal representative of this pressure during at least the intake phase preceding the combustion-expansion phase in the course of the same engine cycle of the corresponding cylinder,

d) entering the speed (N) and inlet manifold pressure (Pca) signals as addresses in a map (16) of reference theoretical gas torque, and deducing therefrom a signal representative of a reference torque (C ref),

e) assigning (17) the reference torque (C ref) a multiplier weighting coefficient (K) associated with the corresponding cylinder and/or the steady-state or transient operating mode of the engine, and deducing therefrom a signal representative of an expected theoretical torque (Cpr), and

f) comparing (19) the signals of the measured gas torque (Cg) and of the expected theoretical torque (Cpr) and concluding that there is a misfire when the ratio of the gas torque (Cg) to the expected theoretical torque (Cpr) becomes less than a defined ratio threshold (S2).

2. Method according to Claim 1, characterized in that it consists in drawing the defined ratio threshold (S2) from a map drawn up as a function of the rotational speed (N) of the engine and of the pressure (Pca) at the air inlet manifold.

3. Method according to one of Claims 1 and 2, characterized in that it comprises the stage consisting in concluding that there is a misfire if, simultaneously with stage f), the difference between the expected torque (Cpr) and the gas torque (Cg) is greater than one or other of two defined difference thresholds (S3, S4) according to whether the engine is operating in steady-state or transient mode.

4. Method according to any one of Claims 1 to 3, characterized in that it comprises the stage consisting moreover in deriving (8) the signal representative of the measured gas torque (Cg) from the engine speed signal (N).

5. Method according to any one of Claims 1 to 4, characterized in that it comprises the stage consisting in deducing the reference torque signals (C ref) from a map (16) of overall torque for all the cylinders of the engine, valid for a family of engines, this map being preestablished in steady-state regime of the engine and stored in memory in the form of a two-dimensional map table expressing values of the reference theoretical gas torque for various values of, on the one hand, the speed of the engine (N), and, on the other hand, the pressure at the inlet manifold (Pca), which values are chosen in order to optimize the calculation of the reference torque (C ref) by linear interpolation.

6. Method according to any one of Claims 1 to 5, characterized in that it comprises the stage consisting in recalculating (7) the weighting coefficient (K) for each combustion-expansion phase of the engine, and in a different way according to whether the engine is operating in steady-state or transient mode (6, 18).

7. Method according to Claim 6, characterized in that it comprises the stage consisting in calculating (7) the weighting coefficient (K) as being equal, in transient mode, to the mean (KT) of a defined number of the last consecutive Cg/C ref ratios, independently of the cylinders, and, in steady-state mode, as being equal to the mean (KS) of a defined number of the last consecutive Cg/C ref ratios for the cylinder corresponding to the combustion-expansion phase in question.

8. Method according to one of Claims 6 and 7, characterized in that, in transient mode, the weighting coefficient (KT) is calculated according to the formula:

$$K T = 1/4 \, [Cg \, n\text{-}4/C \, ref \, n\text{-}4 + Cg \, n\text{-}3/C \, ref \, n\text{-}3 + Cg \, n\text{-}2/C \, ref \, n\text{-}2 + Cg \, n\text{-}1/C \, ref \, n\text{-}1]$$

in which "n" indicates the order of the combustion-expansion phase in question, for a 4-cylinder engine.

9. Method according to one of Claims 6 and 7, characterized in that, in steady-state mode, the weighting coefficient (KS) is calculated according to the formula:

$$KS = 1/4 \, [Cg \, n\text{-}16/C \, ref \, n\text{-}16 + Cg \, n\text{-}12/C \, ref \, n\text{-}12 + Cg \, n\text{-}8/C \, ref \, n\text{-}8 + Cg \, n\text{-}4/C \, ref \, n\text{-}4]$$

in which "n" indicates the order of the combustion-expansion phase in question, for a 4-cylinder engine.

10. Method according to any one of Claims 6 to 9, characterized in that it comprises the stage consisting, in order to determine whether the engine is operating in steady-state or transient mode, in using a signal representative of the operating mode (6) supplied by an engine monitoring system (5) controlling the injection and, if appropriate, the ignition of the engine.

11. Method according to any one of Claims 6 to 10, characterized in that it comprises the stage consisting in determining (18) the steady-state or transient operating mode of the engine on the basis of the difference, preferably in absolute value, between two reference torque values (C ref), one calculated for the combustion-expansion phase in question, and the other for the last but one preceding combustion-expansion phase, and in concluding that the mode is transient if this difference is greater than a defined mode threshold (S1), equal for example to 3 N.m, and steady-state if this difference is less than the said mode threshold (S1) for a defined number of consecutive engine cycles.

12. Method according to any one of Claims 7 to 9, characterized in that it comprises the stage consisting in storing in memory (20, 21) a defined number of the latest successive values of the gas torque (Cg) and of the reference torque (C ref) which are necessary for calculating the weighting coefficient (K), and in storing the corresponding calculated value of the expected torque (Cpr) in place of a value of the gas torque (Cg) if, for this value of (Cg), a misfire is detected or if no misfire is detected but this value of (Cg) is higher than the product of the corresponding value of (C ref) by an amplification factor (S5), for example a constant preferably equal to 1.2.

13. Method according to any one of Claims 1 to 12, for an engine equipped with a catalyst, characterized in that it comprises the stage moreover consisting in:

measuring (27, 28) the number of misfires or their rates, which are detected during sliding windows of respectively N1 and N2 engine revolutions, for example 200 and 1000 revolutions,
comparing (29, 30) each of these measurements with at least one threshold (S8, S9), specific to each window, and
giving an alarm signal (31) corresponding to a critical state of the catalyst in the event of crossing of the threshold (S8) specific to the window (27) of N1 revolutions, and/or an alarm signal (32) corresponding to a crossing of a threshold for emission of noxious components in the exhaust gases in the event of crossing of the threshold (S9) specific to the window (28) of N2 revolutions.

14. Method according to any one of Claims 1 to 13, characterized in that it comprises the stage consisting in deactivating the detection of the misfires in injection cutoff phase and/or in engine driven phase, this latter phase being detected when the pressure at the inlet manifold (Pca) becomes less than a pressure threshold which is a function of the rotational speed (N) of the engine and/or when the gas torque (Cg) measured is less than a limit torque, which may correspond, for example, to the gas torque measured with zero useful torque for an identical rotational speed (N) of the engine.

15. Method according to Claim 14, characterized in that it comprises the stage consisting in entering the speed signal (N) as address into a one-dimensional map table (16), expressing the values of the limit torque for various values of the speed (N) of the engine, and in deducing therefrom, by preferably linear interpolation, a signal representative of the limit torque (Clim) which is compared with the measured gas torque (Cg) in order to deduce therefrom that the motor is pulling or driven according to whether (Cg) is higher or lower than (Clim).

16. Method according to Claim 15, characterized in that it comprises the stage consisting in deactivating (22, 24) the misfire detection if the expected torque (Cpr) is less than the product of the limit torque (Clim) and a reducing factor (S7) less than or equal to 1, preferably a constant equal, for example, to 1/3.

17. Method according to any one of Claims 15 and 16, characterized in that it comprises the stage consisting in deactivating (22, 24) the misfire detection if the weighting coefficient (K) becomes less than a coefficient threshold (S6) preferably constant and less than 1, for example equal to 0.7.

18. Method according to any one of Claims 1 to 17, characterized in that it consists in substituting for the signal (Pca) any other signal representative of the unitary filling of the cylinders of the engine, such as an air throughput signal or signal of the opening angle of an air supply control or regulation butterfly valve.

19. Method according to any one of Claims 1 to 18, characterized in that it consists in reversing the processing of the gas torque (Cg) and reference torque (C ref) signal, and in weighting the values of the gas torque (Cg) in order to compare them with interpolated but not weighted values of the reference torque (C ref), in the corresponding comparison stages of the method.

**20.** Apparatus for detecting misfires of a controlled ignition internal combustion engine, for implementing the method according to any one of the preceding Claims 1 to 19, characterized in that it comprises:

at least one engine rotational speed sensor (1) delivering a speed signal (N),

at least one air inlet manifold pressure sensor (11), delivering a corresponding signal (Pca) for each cylinder of the engine,

at least one engine phase sensor (12), making it possible to identify each cylinder of the engine,

means (8) for calculating the gas torque (Cg), from the engine speed signal (N),

memory means (16, 17, 19), for storing maps and thresholds, calculating means (7, 17, 19) and comparison means (19, 22) making it possible to calculate and/or store values of the reference torque (C ref), of the expected torque (Cpr), of the weighting coefficient (K), of the Cg/Cpr ratio, of the difference Cpr - Cg, and to compare them with thresholds (S2, S3, S4) in order to determine the presence of misfires (21, 23).

FIG.1.

FIG.2.

$(C_{pr})$  $(C_g)$  19

$\dfrac{C_g}{C_{pr}} < S_2$  et  $C_{pr} - C_g > S_3$ ou $S_4$

OUI

NON

21

20

22

OUI  $C_{pr} > S_7 . C_{lim}$ et $K > S_6$  NON

23

24

EP 0 678 156 B1

# FIG. 3.

EP 0 678 156 B1